# EUROPEAN PATENT SPECIFICATION

(11) **EP 4 407 779 B1**
(45) Date of publication and mention of the grant of the patent: **28.10.2026**
(21) Application number: 22939299.8
(22) Date of filing: 29.04.2022
(51) Int. Cl.: H01M 50/528, H01M 50/107, H01M 50/531, H01M 50/536, H01M 50/545, H01M 50/152, H01M 50/538, H01M 50/533, H01M 50/559, H01M 50/147, H01M 50/342

(54) **BATTERY CELL, BATTERY, AND ELECTRICAL DEVICE**
BATTERIEZELLE, BATTERIE UND ELEKTRISCHE VORRICHTUNG
ÉLÉMENT DE BATTERIE, BATTERIE ET DISPOSITIF ÉLECTRIQUE

(43) Date of publication of application: 31.07.2024
(60) Divisional application: 26204885.3 / 4 832 216
(73) Proprietor: Contemporary Amperex Technology (Hong Kong) Limited, Central, Hong Kong (HK)
(72) Inventor: GU, Hui, Ningde, Fujian 352100 (CN); SUN, Dongsheng, Ningde, Fujian 352100 (CN); JIN, Haizu, Ningde, Fujian 352100 (CN)
(74) Representative: Lorenz Seidler Gossel Part. mbB
(86) International application number: PCT/CN2022/090523
(87) International publication number: WO 2023/206451

(56) References cited:
- CN-A- 1 694 281
- CN-U- 207 651 539
- CN-U- 207 651 539
- CN-U- 216 085 238
- CN-U- 216 085 238
- CN-U- 216 213 727
- CN-U- 216 213 942

## Description

### Technical Field

The present application relates to the technical field of batteries, and in particular to a battery cell, a battery and a power consuming device.

### Background Art

With the development of new energy technologies, the application of batteries is becoming more and more extensive. For example, the batteries are widely used in mobile phones, notebook computers, electric mopeds, electric vehicles, electric aircrafts, electric ships, electric toy cars, electric toy ships, electric toy aircrafts, electric tools, etc.

As an energy storage element, a battery cell generally outputs electric energy through a chemical reaction between an electrode assembly and an electrolyte. In the battery cell, an end cap may be electrically connected to an electrode assembly by means of a current collecting member. In order to ensure normal use of the battery cell, it is required to ensure the stability of the electrical connection between the end cap and the electrode assembly. Therefore, how to improve the stability of the electrical connection between the end cap and the electrode assembly is an urgent problem to be solved in battery technology.

CN 207 651 539 U discloses an insulating seal structure comprising electrode extraction structure used for to connect the negative-electrode cover of shell and set up the insulating pad and the sealing washer between electrode extraction structure and the nagetive-elctrode cover and such a insulating seal structure is applied to the energy storage device. Moreover, CN 216 213 727 U discloses a structure arranged on the end cap to provide a clearance gap between the first tab and the cover body for avoiding the damage of the weak portion before normal use. Furthermore, CN 216 085 238 U discloses a welding structure that the current collecting member is configured to be welded with the end cap and the first tab respectively, to realize the electrical connection between the end cap and the first tab.

### Summary

Embodiments of the present application provide a battery cell, a battery and a power consuming device, which can effectively improve the stability of the electrical connection between an end cap and an electrode assembly.

In a first aspect, the embodiments of the present application provide a battery cell, including a housing, an electrode assembly, an end cap, and a current collecting member; wherein the housing has an opening; the electrode assembly is accommodated inside the housing; the end cap is connected to the housing and closes the opening; the current collecting member is located inside the housing, is arranged on a side of the electrode assembly facing the end cap, and is connected to the end cap and the electrode assembly; and wherein the end cap includes a connecting portion connected to the current collecting member, and in a thickness direction of the end cap, an accommodating groove is provided in a surface of the current collecting member facing the end cap, and the connecting portion is at least partially accommodated in the accommodating groove.

In the above technical solution, the connecting portion of the end cap connected to the current collecting member is at least partially accommodated in the accommodating groove, the accommodating groove can provide an avoidance space for the connecting portion, and a stress buffer region can be formed in the end cap at a position where the accommodating groove is provided, thereby decreasing the pressing force of the connecting portion on the current collecting member after the end cap is connected to the housing, reducing the deformation of the current collecting member, reducing the risk of connection failure of the current collecting member and the electrode assembly caused by excessive deformation of the current collecting member subjected to the pressing force from the connecting portion, and improving the stability of the electrical connection between the end cap and the electrode assembly.

In some embodiments, the accommodating groove is a closed groove that is connected end to end and that extends in a circumferential direction of the current collecting member. The accommodating groove of such a structure has good adaptability to the connecting portion, and the connecting portion can be accommodated in the accommodating groove in different orientations in a circumferential direction of the end cap, such that the mounting difficulty of the end cap is reduced.

In some embodiments, the accommodating groove is an annular groove. The annular accommodating groove is simple in structure and easy to form.

According to claim 1, the accommodating groove has a first groove bottom surface and a first groove side surface connected to the first groove bottom surface; in a thickness direction, the first groove bottom surface faces the connecting portion; and in a first direction, the first groove side surface is located on an inner side of the connecting portion, the first direction being perpendicular to the thickness direction; wherein an angle between the first groove side surface and the first groove bottom surface is represented by θ₁and satisfies: 90° < θ₁ < 180°. The first groove side surface located on the inner side of the connecting portion is arranged at an obtuse angle from the first groove bottom surface, the first groove side surface is angled, and the first groove side surface guides the connecting portion, such that the connecting portion more easily enter the accommodating groove, and the mounting efficiency of the end cap is improved.

According to claim 1, the accommodating groove further includes a second groove side surface connected to the first groove bottom surface, the second groove side surface being located on an outer side of the connecting portion in the first direction; wherein an angle between the second groove side surface and the first groove bottom surface is represented by θ₂ and satisfies: 90° < θ₂ < 180°. The second groove side surface located on the outer side of the connecting portion is arranged at an obtuse angle from the second groove bottom surface, the second groove side surface is angled, and the second groove side surface guides the connecting portion, such that the connecting portion more easily enter the accommodating groove, and the mounting efficiency of the end cap is improved.

According to claim 1, in the first direction, each of the first groove side surface and the second groove side surface is arranged at a distance from the connecting portion. In this way, a gap between the first groove side surface and the second groove side surface is greater than the width of the part of the connecting portion located in the accommodating groove. On the one hand, the connecting portion more easily enter the accommodating groove, and on the other hand, the risk of increased deformation of the current collecting member due to the application of the pressing force of the connecting portion to the first groove side surface and the second groove side surface is reduced.

In some embodiments, the accommodating groove has a first groove bottom surface and a second groove side surface connected to the first groove bottom surface; in a thickness direction, the first groove bottom surface faces the connecting portion; and in the first direction, the second groove side surface is located on an outer side of the connecting portion, the first direction being perpendicular to the thickness direction; wherein an angle between the second groove side surface and the first groove bottom surface is represented by θ₂ and satisfies: 90° < θ₂ < 180°. The second groove side surface located on the outer side of the connecting portion is arranged at an obtuse angle from the second groove bottom surface, the second groove side surface angled, and the second groove side surface guides the connecting portion, such that the connecting portion more easily enter the accommodating groove.

In some embodiments, the accommodating groove includes a first groove side surface and a second groove side surface, and in the first direction, the first groove side surface and the second groove side surface are located on two sides of the connecting portion respectively, the first direction being perpendicular to the thickness direction; and a distance between the first groove side surface and the second groove side surface in the first direction gradually decreases in a depth direction of the accommodating groove. In this way, the width of the accommodating groove gradually decreases from the opening of the accommodating groove in the depth direction, such that the connecting portion more easily enter the accommodating groove.

In some embodiments, the current collecting member includes a first connecting region and a second connecting region; the first connecting region is connected to the connecting portion and formed in the current collecting member at a position where the accommodating groove is provided; and the second connecting region is connected to the electrode assembly; wherein projections of the first connecting region and the second connecting region on a plane perpendicular to the thickness direction do not overlap with each other. With such a structure, the first connecting region is staggered with the second connecting region, the first connecting region and the second connecting region do not affect each other, the connection between the first connecting region and the connecting portion does not affect the connection between the second connecting region and the electrode assembly, thereby improving the stability of the connection between the current collecting member and the electrode assembly.

In some embodiments, the first collecting region surrounds an outer side of the second connecting region. With such a structure, the first connecting region has a large size, and a current passage area between the current collecting member and the end cap can be increased.

In some embodiments, the thickness of the second connecting region is represented by L, the depth of the accommodating groove is represented by H, and the thickness and the depth satisfy: 0.15≤H/L < 1. The ratio of the depth of the accommodating groove to the thickness of the second connecting region is set within a reasonable range, such that the depth of the accommodating groove is not too small so as to accommodate more parts of the connecting portion, and the deformation of the current collecting member is reduced.

In some embodiments, the accommodating groove has a first groove bottom surface, and the connecting portion abuts against the first groove bottom surface in the thickness direction. With such a structure, a contact area between the connecting portion and the current collecting member is increased, and thus the current passage area between the current collecting member and the end cap is increased.

In some embodiments, the current collecting member is welded to the connecting portion. The current collecting member is firmly connected to the connecting portion, achieving stable current passage between the current collecting member and the connecting portion.

In some embodiments, the connecting portion is of a closed structure that is connected end to end and that extends in a circumferential direction of the end cap. With such a structure, on the one hand, the periphery of the current collecting member is uniformly subjected to a pressing force from the connecting portion, and the deformation of the current collecting member can be effectively reduced; on the other hand, the current passage area between the current collecting member and the end cap is increased.

In some embodiments, the end cap further includes a body portion connected to the housing, the body portion having, in the thickness direction, an inner surface and an outer surface that are opposite each other, the inner surface facing the current collecting member, and the connecting portion protruding from the inner surface; and the recess being arranged in the body portion at a position corresponding to the connecting portion, and the recess being recessed in a direction from the outer surface to the current collecting member. The arrangement of the recess reduces the thickness of the end cap at the connecting portion and allows the connecting portion and the current collecting member to be more easily connected together, enhancing the stability of the connection between the connecting portion and the current collecting member .

In some embodiments, the body portion includes a pressure relief portion, the connecting portion surrounds the pressure relief portion, and the pressure relief portion is provided with an indented groove. With such a structure, the end cap has the function of pressure relief, and a weakened region is formed on the pressure relief portion at a position where the indented groove is provided, and cracks when a pressure or temperature inside the battery cell reaches a threshold, so as to release the pressure inside the battery cell.

In some embodiments, the pressure relief portion partially protrudes in a direction close to the current collecting member and forms a boss, and a groove is formed on the side of the pressure relief portion facing away from the current collecting member a position corresponding to the boss; the indented groove is provided in a surface of the boss facing the current collecting member; and/or the groove has a second groove bottom surface provided with the indented groove. With such a structure, the region of the end cap provided with the indented groove is wholly recessed toward the interior of the battery cell. When the end cap is subjected to an impact force from the outside of the battery cell, the impact force is less likely to directly act on the region of the end cap provided with the groove, so as to achieve the purpose of protecting the region of the end cap provided with the indented groove, and to reduce the risk of damages and cracks in the region of the end cap provided with the indented groove due to the impact force on the end cap.

In some embodiments, in the thickness direction, the boss is arranged a distance from the current collecting member. In this way, a certain gap is present between the boss and the current collecting member, the current collecting member is less likely to affect pressure relief through the end cap, and it is ensured that the end cap can normally release the pressure when the pressure or temperature inside the battery cell reaches the threshold.

In a second aspect, the embodiments of the present application provide a battery, including a case and battery cells according to any one of claims 1-10, wherein the battery cells are accommodated inside the case.

In a third aspect, the embodiments of the present application provide a power consuming device, including a battery according to claim 11.

### Brief Description of the Drawings

In order to more clearly describe the technical solutions of embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any creative effort.
FIG. 1 is a schematic structural diagram of a vehicle according to some embodiments of the present application;
FIG. 2 is an exploded view of a battery according to some embodiments of the present application;
FIG. 3 is a cross-sectional view of a battery cell according to some embodiments of the present application;
FIG. 4 is a partial view of the battery cell shown in FIG. 3;
FIG. 5 is a schematic structural diagram of a current collecting member shown in FIG. 4;
FIG. 6 is a cross-sectional view of the current collecting member shown in FIG. 5;
FIG. 7 is a partial enlarged view of part A of the battery cell shown in FIG. 4;
FIG. 8 is a schematic structural diagram of a current collecting member according to other embodiments of the present application; and
FIG. 9 is a schematic connection diagram of an end cap and the current collecting member shown in FIG. 4.

List of reference signs: 10 - Case; 11 - First portion; 12 - Second portion; 20 - Battery cell; 21 - Housing; 22 - Electrode assembly; 221 - Tab; 23 - End cap; 231 - Connecting portion; 232 - Body portion; 2321 - Inner surface; 2322 - Outer surface; 2323 - Pressure relief portion; 2324 - Indented groove; 2325 - Boss; 2326 - Groove; 2326a - Second groove bottom surface; 233 - Recess; 24 - Current collecting member; 241 - Accommodating groove; 2411 - First groove bottom surface; 2412 - First groove side surface; 2413- Second groove side surface; 242 - First surface; 243 - Second surface; 244 - First connecting region; 245 - Second connecting region; 246 - Central hole; 25 - Electrode terminal; 100 - Battery; 200 - Controller; 300 - Motor; 1000 - Vehicle; Z - Thickness direction; X - First direction.

### Detailed Description of Embodiments

In order to make the objectives, technical solutions and advantages of embodiments of the present application clearer, the technical solutions in the embodiments of the present application will be described clearly below with reference to the accompanying drawings in the embodiments of the present application.

In the present application, a battery cell may include a lithium ion secondary battery, a lithium ion primary battery, a lithium-sulfur battery, a sodium-lithium ion battery, a sodium ion battery or a magnesium ion battery, etc., which will not be limited in the embodiments of the present application. The battery cell may be cylindrical, flat, cuboid or in other shapes, which is also not limited in embodiments of the present application. The battery cells are generally classified into three types depending on the way of package: cylindrical battery cells, prismatic battery cells and pouch battery cells, which also will not be limited in the embodiments of the present application.

A battery mentioned in embodiments of the present application refers to a single physical module including one or more battery cells to provide a higher voltage and capacity. For example, the battery mentioned in the present application may include a battery module, a battery pack, etc. The battery generally includes a case for packaging one or more battery cells. The case can prevent liquid or other foreign matters from affecting charging or discharging of the battery cell(s).

The battery cell includes an electrode assembly and an electrolyte. The electrode assembly is composed of a positive electrode plate, a negative electrode plate and a separator. The operation of the battery cell mainly relies on the movement of metal ions between the positive electrode plate and the negative electrode plate. The positive electrode plate includes a positive current collector and a positive active material layer. A surface of the positive current collector is coated with the positive active material layer, the positive current collector not coated with the positive active material layer protrudes from the positive current collector coated with the positive active material layer, and the positive current collector not coated with the positive active material layer serves as a positive tab. Taking a lithium ion battery as an example, the positive electrode current collector may be made of an aluminum, and the positive electrode active material may be lithium cobalt oxide, lithium iron phosphate, ternary lithium, lithium manganate, etc. The negative electrode plate includes a negative current collector and a negative active material layer. A surface of the negative current collector is coated with the negative active material layer, the negative current collector that is not coated with the negative active material layer protrudes from the negative current collector coated with the negative active material layer, and the negative current collector that is not coated with the negative active material layer is used as a negative tab. The negative electrode current collector may be made of copper, and the negative electrode active material may be carbon, silicon, etc. In order to ensure that no fusing occurs when a large current passes, a plurality of positive tabs are provided and are stacked together, and a plurality of negative tabs are provided and are stacked together. The separator may be made of PP (polypropylene), PE (polyethylene), etc. In addition, the electrode assembly may be of a wound structure or a laminated structure, which will not be limited in the embodiments of the present application.

In the battery cell, the electrode assembly may be electrically connected to an end cap by means of a current collecting member so as to output electric energy from the battery cell by means of the end cap or the housing connected to the end cap. The current collecting member is connected to the electrode assembly, and a connecting portion of the end cap is connected to the current collecting member.

In order to reduce sways of the electrode assembly in the housing, a pressing force may be applied to the current collecting member by the connecting portion of the end cap, and after the end cap is connected to the housing, the electrode assembly and the current collecting member are limited inside the housing. The inventors have found that, for the battery cell of such a structure, a failure in the electrical connection between the end cap and the electrode assembly is likely to occur.

After researches, the inventors have found that, during assembly of the battery cell, the connecting portion of the end cap generates, after the end cap is connected to the housing, a large pressing force on the current collecting member, resulting in great deformation of the current collecting member and a failure in the connection between the current collecting member and the electrode assembly and thus causing a failure in the electrical connection between the end cap and the electrode assembly as well as poor stability of the electrical connection between the end cap and the electrode assembly.

In view of this, the embodiments of the present application provide a battery cell, in which an accommodating groove is provided in a surface of the current collecting member facing the end cap, so as to accommodate at least a part of the connecting portion of the end cap. The accommodating groove can provide an avoidance space for the connecting portion, and a stress buffer region can be formed in the end cap at a position where the accommodating groove is provided, thereby decreasing the pressing force of the connecting portion on the current collecting member after the end cap is connected to the housing, reducing the deformation of the current collecting member, reducing the risk of connection failure of the current collecting member and the electrode assembly caused by excessive deformation of the current collecting member subjected to the pressing force from the connecting portion, and improving the stability of the electrical connection between the end cap and the electrode assembly.

The technical solution described in the embodiments of the present application is applicable to a battery and a power consuming device using a battery.

The power consuming device may be a vehicle, a mobile phone, a portable device, a notebook computer, a ship, a spacecraft, an electric toy, a power tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling power tool, and a railway power tool, such as an electric drill, an electric grinder, an electric wrench, an electric screwdriver, an electric hammer, an electric impact drill, a concrete vibrator, and an electric planer. The power consuming devices described above are not specially limited in the embodiments of the present application.

For ease of description, an example in which the power consuming device refers to a vehicle is used for description in the following embodiments.

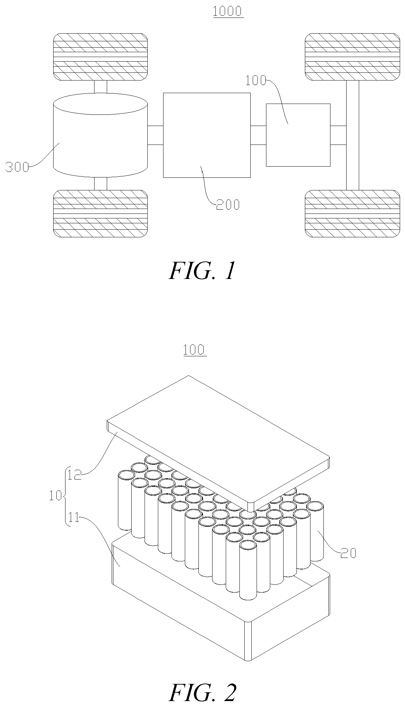

With reference to FIG. 1, FIG. 1 is a schematic diagram of a vehicle 1000 according to some embodiments of the present application. A battery 100 is provided inside the vehicle 1000, and the battery 100 may be arranged at the bottom, the front or the back of the vehicle 1000. The battery 100 may be configured to supply power to the vehicle 1000. For example, the battery 100 may be used as a power supply for operating the vehicle 1000.

The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as a power supply for operating the vehicle 1000, but can also serve as a power supply for driving the vehicle 1000, in place of or partially in place of fuel or natural gas, to provide driving power for the vehicle 1000.

Referring to FIG. 2, FIG. 2 is an exploded view of the battery 100 according to some embodiments of the present application. The battery 100 includes a case 10 and battery cells 20. The case 10 is configured to accommodating the battery cells 20.

The case 10 herein is a component for accommodating the battery cells 20, the case 10 provides an accommodating space for the battery cells 20, and the case 10 may be of various structures. In some embodiments, the case 10 may include a first portion 11 and a second portion 12. The first portion 11 and the second portion 12 are fitted to each other in a covered manner to define the accommodating space for accommodating the battery cell 20. The first portion 11 and the second portion 12 may have various shapes such as a cuboid and a cylinder. The first portion 11 may be of a hollow structure with an open side, the second portion 12 may also be of a hollow structure with an open side, and the open side of the second portion 12 covers the open side of the first portion 11, such that the case 10 having the accommodating space is formed. Alternatively, the first portion 11 is of a hollow structure with an open side, the second portion 12 is of a plate-like structure, and the second portion 12 covers the open side of the first portion 11, such that the case 10 having the accommodating space is formed. The first portion 11 and the second portion 12 may be sealed by a sealing element, which may be a seal ring, a sealant, etc.

In the battery 100, one or more battery cells 20 may be provided. If a plurality of battery cells 20 are provided, the plurality of battery cells 20 may be connected in series, in parallel, or in series-parallel. The series-parallel connection refers that some of the plurality of battery cells 20 are connected in series and the rest are connected in parallel. It is possible that a plurality of battery cells 20 are first connected in series or in parallel or in series-parallel to form a battery module, and a plurality of battery modules are then connected in series or in parallel or in series-parallel to form a unit and are accommodated inside the case 10. It is also possible that all the battery cells 20 are directly connected in series, or in parallel, or in series-parallel, and a unit composed of all the battery cells 20 is then accommodated inside the case 10.

In some embodiments, the battery 100 may further include a busbar component, and the plurality of battery cells 20 may be electrically connected by means of the busbar component, so as to implement series connection, parallel connection, or series-parallel connection between the plurality of battery cells 20. The busbar component may be a metal conductor such as a copper conductor, an iron conductor, an aluminum conductor, a stainless steel conductor, and an aluminum alloy conductor.

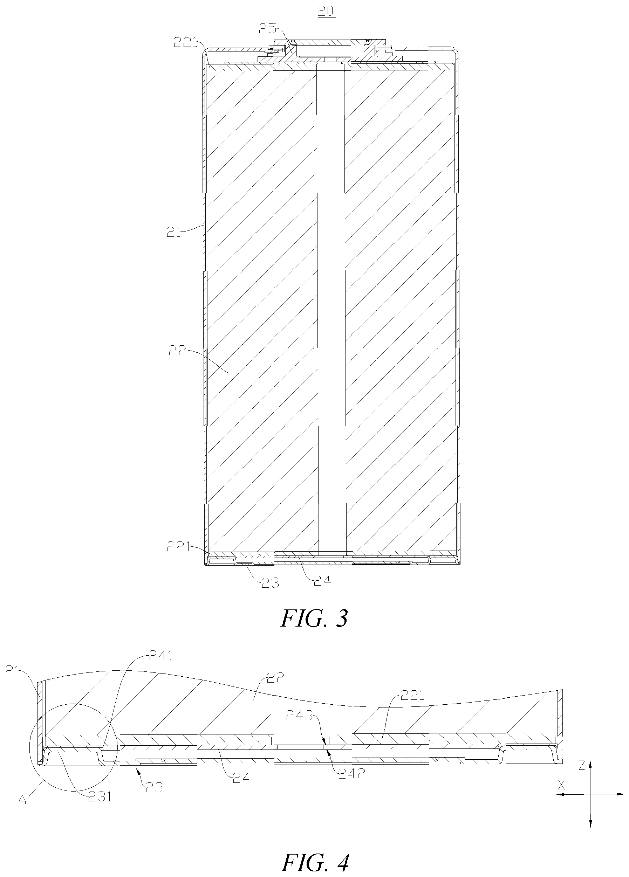

Referring to FIG. 3, FIG. 3 is a cross-sectional view of a battery cell 20 according to some embodiments of the present application. The battery cell 20 includes a housing 21, an electrode assembly 22, an end cap 23, and a current collecting member 24.

The housing 21 is a component configured to accommodate the electrode assembly 22. The housing 21 may be of a hollow structure with an opening formed at one end. The housing 21 may be of a hollow structure with openings formed at opposite ends. The housing 21 may have various shapes, such as a cylinder and a cuboid. The housing 21 may be made of various materials, such as copper, iron, aluminum, steel, and aluminum alloy.

The electrode assembly 22 is a component in which an electrochemical reaction occurs in the battery cell 20. The electrode assembly 22 may include a positive electrode plate, a negative electrode plate, and a separator. The electrode assembly 22 may be of a wound structure formed by winding the positive electrode plate, the separator and the negative electrode plate, or a stacked structure formed by stacking the positive electrode plate, the separator and the negative electrode plate. The electrode assembly 22 is provided with tabs 221. The tabs 221 are respectively a positive tab and a negative tab. The positive tab may be a portion of the positive electrode plate that is not coated with a positive electrode active material layer, and the negative tab may be a portion of the negative electrode plate that is not coated with a negative electrode active material layer.

The end cap 23 is a component that closes the opening of the housing 21 to isolate internal environment of the battery cell 20 from external environment. The end cap 23 and the housing 21 together define a sealed space for accommodating the electrode assembly 22, the electrolyte and other components. The end cap 23 may be shaped to adapt to the shape of the housing 21. For example, the housing 21 is of a cuboid structure, and the end cap 23 is of a rectangular structure adapted to the housing 21. For another example, the housing 21 is of a cylinder structure, and the end cap 23 is of a circular structure adapted to the housing 21. The end cap 23 may be made of various materials, such as copper, iron, aluminum, steel, and aluminum alloy. The end cap 23 and the housing 21 may be connected together by welding.

In the battery cell 20, one or two end caps 23 may be provided. If the housing 21 is of a hollow structure with an opening formed at one end, one end cap 23 may be provided correspondingly. If the housing 21 is of a hollow structure with openings formed at two ends, two end caps 23 may be provided correspondingly, and the two end caps 23 respectively close the two openings of the housing 21.

The current collecting member 24 is a component configured to achieve an electrical connection between two components. For example, the electrical connection between the electrode assembly 22 and the end cap 23 can be achieved by means of the current collecting member 24. A tab 221 (the positive tab or the negative tab) of the electrode assembly 22 and the end cap 23 are both connected to the current collecting member 24, so as to achieve the electrical connection between the end cap 23 and the electrode assembly 22.

In some embodiments, as shown in FIG. 3, an electrode terminal 25 may also be arranged in the battery cell 20. The housing 21 is of a hollow structure with an opening formed at one end, the end cap 23 is connected to the housing 21 and closes the opening of the housing 21, the electrode terminal 25 may be arranged at an end of the housing 21 opposite the end cap 23, the electrode terminal 25 is electrically connected to one tab 221 of the electrode assembly 22, and the end cap 23 is electrically connected to the other tab 221 of the electrode assembly 22 by means of the current collecting member 24.

Exemplarily, the electrode terminal 25 is riveted to the end of the housing 21 opposite the end cap 23. The tab 221 of the electrode assembly 22 electrically connected to the electrode terminal 25 is the positive tab, and the tab 221 of the electrode assembly 22 electrically connected to the end cap 23 is the negative tab.

Referring to FIG. 4, FIG. 4 is a partial view of the battery cell 20 shown in FIG. 3. The embodiments of the present application provide a battery cell 20. The battery cell 20 includes a housing 21, an electrode assembly 22, an end cap 23, and a current collecting member 24. The housing 21 is provided with an opening. The electrode assembly 22 is accommodated inside the housing 21. The end cap 23 is connected to the housing 21 and closes the opening. The current collecting member 24 is located inside the housing 21, the current collecting member 24 is arranged on a side of the electrode assembly 22 facing the end cap 23, and the current collecting member 24 is connected to the end cap 23 and the electrode assembly 22. The end cap 23 includes a connecting portion 231 connected to the current collecting member 24. In a thickness direction Z of the end cap 23, an accommodating groove 241 is provided in a surface of the current collecting member 24 facing the end cap 23, and the connecting portion 231 is at least partially accommodated in the accommodating groove 241.

The current collecting member 24 is a component for achieving the electrical connection between the end cap 23 and the electrode assembly 22. The current collecting member 24 may have various shapes, such as circular and rectangular. The current collecting member 24 may be shaped to adapt to the shape of the housing 21. For example, the housing 21 is a cylinder, the current collecting member 24 is of a circular structure, and the current collecting member 24 may also be referred to as a current collecting disc. The current collecting member 24 is connected to both the electrode assembly 22 and the end cap 23. The current collecting member 24 is connected to the tab 221 of the electrode assembly 22 together, and the current collecting member 24 is connected to the connecting portion 231 of the end cap 23 together. The current collecting member 24 and the tab 221 of the electrode assembly 22 may be connected in such a way that the current collecting member and the tab are only in a contact state and are not fixed. For example, the current collecting member 24 and the tab 221 of the electrode assembly 22 abut against each other. The current collecting member 24 and the tab 221 of the electrode assembly 22 may also be connected in such a way that the current collecting member and the tab are fixed to each other. For example, the current collecting member 24 is welded to the tab 221 of the electrode assembly 22. The connecting portion 231 and the current collecting member 24 may be connected in such a way that the connecting portion and the current collecting member are only in a contact state and are not fixed. For example, the connecting portion 231 and the current collecting member 24 abut against each other. The connecting portion 231 and the current collecting member 24 may also be connected in such a way that the connecting portion and the current collecting member are fixed to each other. For example, the connecting portion 231 is welded to the current collecting member 24. It should be noted that the tab 221 connected to the current collecting member 24 in the electrode assembly 22 may be the positive tab or the negative tab.

The connecting portion 231 is a portion of the end cap 23 connected to the current collecting member 24. The connecting portion 231 may be a protrusion of the end cap 23 partially protruding close to the interior of the battery cell 20, and the protrusion and the end cap 23 are in contact with each other to allow currents to pass between the end cap 23 and the current collecting member 24.

The accommodating groove 241 forms a grooveed space to accommodate the connecting portion 231. The accommodating groove 241 may accommodate the whole connecting portion 231, or may accommodate part of the connecting portion 231. The accommodating groove 241 is provided in the surface of the current collecting member 24 facing the end cap 23, the surface of the current collecting member 24 facing the end cap 23 is a first surface 242, the surface of the current collecting member 24 facing away from the end cap 23 is a second surface 243, and the second surface 243 abuts against the tab 221 of the electrode assembly 22. The accommodating groove 241 may traverse an outer peripheral surface of the current collecting member 24, or may not traverse the outer peripheral surface of the current collecting member 24. The accommodating groove 241 may be shaped as the same as the connecting portion 231. For example, both the accommodating groove 241 and the connecting portion 231 are of an annular structure. The accommodating groove 241 may also be shaped differently from the connecting portion 231. For example, the accommodating groove 241 is of an annular structure, and the connecting portion 231 is of a semi-annular structure.

In accordance with claim 1, the connecting portion 231 of the end cap 23 connected to the current collecting member 24 is at least partially accommodated in the accommodating groove 241, the accommodating groove 241 can provide an avoidance space for the connecting portion 231, and a stress buffer region can be formed in the end cap 23 at the position where the accommodating groove 241 is provided, thereby decreasing a pressing force of the connecting portion 231 on the current collecting member 24 after the end cap 23 is connected to the housing 21, reducing the deformation of the current collecting member 24, reducing the risk of connection failure of the current collecting member 24 and the electrode assembly 22 caused by excessive deformation of the current collecting member 24 subjected to the pressing force from the connecting portion 231, and improving the stability of the electrical connection between the end cap 23 and the electrode assembly 22.

In some embodiments, still referring to FIG. 4, the accommodating groove 241 is a closed groove that is connected end to end and that extends in the circumferential direction of the current collecting member 24.

The accommodating groove 241 extends along a closed trajectory connected end to end so as to form the closed groove. The closed trajectory may be rectangular or circular. If the closed trajectory is circular, the accommodating groove 241 is annular, and the grooveed space formed by the accommodating groove 241 is an annular space. The closed trajectory may be shaped to adapt to the current collecting member 24. For example, the current collecting member 24 is rectangular, and the closed trajectory has a rectangular shape concentric with the current collecting member 24. For another example, the current collecting member 24 is circular, and the closed trajectory has a circular shape concentric with the current collecting member 24.

In this embodiment, the accommodating groove 241 is a closed accommodating groove that is connected end to end and that extends in the circumferential direction of the current collecting member 24, the accommodating groove 241 has good adaptability to the connecting portion 231, and the connecting portion 231 can be accommodated in the accommodating groove 241 in different orientations in a circumferential direction of the end cap 23, such that the mounting difficulty of the end cap 23 is reduced.

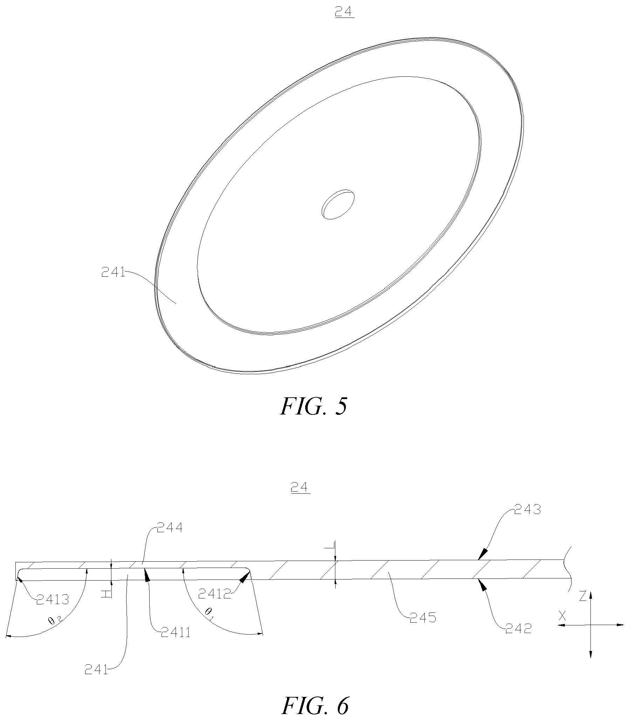

In some embodiments, referring to FIG. 5, FIG. 5 is a schematic structural diagram of the current collecting member 24 shown in FIG. 4, and the accommodating groove 241 is an annular groove.

Exemplarily, the current collecting member 24 is circular, and the accommodating groove 241 and the current collecting member 24 are concentrically arranged.

In FIG. 5, the accommodating groove 241 does not transverse the outer peripheral surface of the current collecting member 24, and the accommodating groove 241 has an outer side surface and an inner side surface. In other embodiments, the accommodating groove 241 may also transverse the outer peripheral surface of the current collecting member 24, such that the accommodating groove 241 has only the inner side surface, and has no outer side surface.

[0080] In the embodiment, the annular accommodating groove 241 is simple in structure and easy to form.

In accordance with claim 1, and referring to FIG. 6, FIG. 6 is a cross-sectional view of the current collecting member 24 shown in FIG. 5, the accommodating groove 241 has a first groove bottom surface 2411 and a first groove side surface 2412, and the first groove side surface 2412 is connected to the first groove bottom surface 2411. In the thickness direction Z of the end cap 23, the first groove bottom surface 2411 faces the connecting portion 231 (not shown in FIG. 6). In the first direction X, the first groove side surface 2412 is located on an inner side of the connecting portion 231, and the first direction X is perpendicular to the thickness direction Z of the end cap 23. An angle between the first groove side surface 2412 and the first groove bottom surface 2411 is represented by θ₁ and satisfies: 90° < θ₁ < 180°. It may be understood that the first groove side surface 2412 is arranged at an obtuse angle from the first groove bottom surface 2411.

In an embodiment in which the current collecting member 24 is circular, the first direction X is a radial direction of the current collecting member 24. In an embodiment in which the current collecting member 24 is rectangular, the first direction X may be a length direction of the current collecting member 24 or a width direction of the current collecting member 24. The first groove side surface 2412 is located on the inner side of the connecting portion 231 in the first direction X, and the first groove side surface 2412 is an inner side surface of the accommodating groove 241.

The first groove bottom surface 2411 is the surface of the accommodating groove 241 located at the deepest position in the depth direction, and the first groove bottom surface 2411 may be perpendicular to the thickness direction Z of the end cap 23. The first groove side surface 2412 may be an angled flat surface or a conical surface. It may be understood that in the embodiment in which the accommodating groove 241 is an annular groove, the first groove side surface 2412 is a circular conical surface.

In this embodiment, the first groove side surface 2412 located on the inner side of the connecting portion 231 is arranged at an obtuse angle from the first groove bottom surface 2411, the first groove side surface 2412 is angled, and the first groove side surface 2412 guides the connecting portion 231, such that the connecting portion 231 more easily enter the accommodating groove 241.

In accordance with claim 1, and still referring to FIG. 6, the accommodating groove 241 further includes a second groove side surface 2413, the second groove side surface 2413 is connected to the first groove bottom surface 2411, and the first groove side surface 2412 is located on an outer side of the connecting portion 231 in the first direction X. An angle between the second groove side surface 2413 and the first groove bottom surface 2411 is represented by θ₂ and satisfies: 90° < θ₂ < 180°. It may be understood that the second groove side surface 2413 is arranged at an obtuse angle from the first groove bottom surface 2411.

The second groove side surface 2413 is located on the outer side of the connecting portion 231 in the first direction X, and the second groove side surface 2413 is an outer side surface of the accommodating groove 241. The second groove side surface 2413 may be an angled flat surface or a conical surface. It may be understood that in an embodiment in which the accommodating groove 241 is an annular groove, the second groove side surface 2413 is a circular conical surface, and a space between the second groove side surface 2413 and the first groove side surface 2412 is a grooveed space of the accommodating groove 241.

In this embodiment, the second groove side surface 2413 located on the outer side of the connecting portion 231 is arranged at an obtuse angle from the first groove bottom surface 2411, the second groove side surface 2413 is angled, and the second groove side surface 2413 guides the connecting portion 231, such that the connecting portion 231 more easily enter the accommodating groove 241.

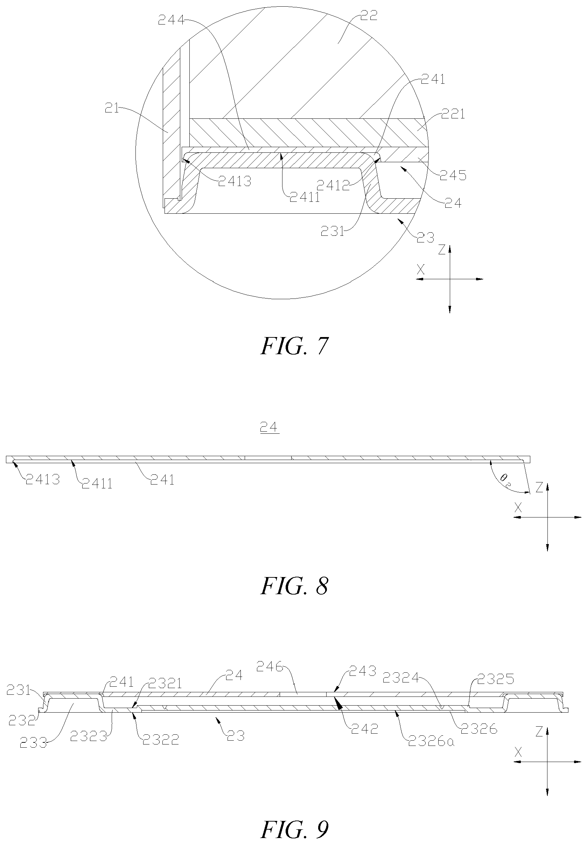

In accordance with claim 1, and referring to FIG. 7, FIG. 7 is a partial enlarged view of part A of the battery cell 20 shown in FIG. 4. In the first direction X, each of the first groove side surface 2412 and the second groove side surface 2413 is arranged at a distance from the connecting portion 231.

It may be understood that the connecting portion 231 is not in contact with the first groove side surface 2412 and is not in contact with the second groove side surface 2413 either. The connecting portion 231 abuts against the first groove bottom surface 2411 of the accommodating groove 241 so as to achieve the electrical connection between the connecting portion 231 and the current collecting member 24.

Taking an example in which the accommodating groove 241 and the connecting portion 231 are both of an annular structure, the first direction X is the radial direction of the current collecting member 24, and in the first direction X, the first groove side surface 2412 of the accommodating groove 241 is arranged at a distance from the inner side surface of the connecting portion 231, and the second groove side surface 2413 of the accommodating groove 241 is arranged at a distance from the outer side surface of the connecting portion 231.

In this embodiment, each of the first groove side surface 2412 and the second groove side surface 2413 is arranged at a distance from the connecting portion 231 in the first direction X in such a way that a gap between the first groove side surface 2412 and the second groove side surface 2413 is greater than the width of the part of the connecting portion 231 located in the accommodating groove 241. On the one hand, the connecting portion 231 more easily enter the accommodating groove 241, and on the other hand, the risk of increased deformation of the current collecting member 24 due to the application of the pressing force of the connecting portion 231 to the first groove side surface 2412 and the second groove side surface 2413 is reduced.

In other embodiments, the inner side surface and the outer side surface of the connecting portion 231 may also abut against the first groove side surface 2412 and the second groove side surface 2413 of the accommodating groove 241 respectively, and the connecting portion 231 is supported by the angled first groove side surface 2412 and the angled second groove side surface 2413, such that the connecting portion 231 is arranged at a distance from the first groove bottom surface 2411 of the accommodating groove 241.

In some embodiments, referring to FIG. 8, FIG. 8 is a schematic structural diagram of a current collecting member 24 according to other embodiments of the present application. The accommodating groove 241 has a first groove bottom surface 2411 and a second groove side surface 2413, and the second groove side surface 2413 is connected to the first groove bottom surface 2411. In the thickness direction Z of the end cap 23, the first groove bottom surface 2411 faces the connecting portion 231 (not shown in FIG. 8). In the first direction X, the second groove side surface 2413 is located on the outer side of the connecting portion 231, and the first direction X is perpendicular to the thickness direction Z of the end cap 23. An angle between the second groove side surface 2413 and the first groove bottom surface 2411 is represented by θ₂ and satisfies: 90° < θ₂ < 180°. It may be understood that the second groove side surface 2413 is arranged at the obtuse angle from the first groove bottom surface 2411.

The first groove bottom surface 2411 is the surface of the accommodating groove 241 located at the deepest position in the depth direction, and the first groove bottom surface 2411 may be perpendicular to the thickness direction Z of the end cap 23. The second groove side surface 2413 is the outer side surface of the accommodating groove 241. The second groove side surface 2413 may be an angled flat surface or a conical surface.

Exemplarily, as shown in FIG. 8, the accommodating groove 241 is circular, the second groove side surface 2413 is a circular conical surface, and a space defined by the second groove side surface 2413 is a grooveed space of the accommodating groove 241.

In this embodiment, the second groove side surface 2413 located on the outer side of the connecting portion 231 is arranged at an obtuse angle from the first groove bottom surface 2411, the second groove side surface 2413 is angled, and the second groove side surface 2413 guides the connecting portion 231, such that the connecting portion 231 more easily enter the accommodating groove 241.

In some embodiments, still referring to FIG. 6 and FIG. 7, the accommodating groove 241 includes a first groove side surface 2412 and a second groove side surface 2413, the first groove side surface 2412 and the second groove side surface 2413 are respectively located on two sides of the connecting portion 231 in the first direction X, and the first direction X is perpendicular to the thickness direction Z of the end cap 23. A distance between the first groove side surface 2412 and the second groove side surface 2413 in the first direction X gradually decreases in a depth direction of the accommodating groove 241.

In the thickness direction Z of the end cap 23, the current collecting member 24 has a first surface 242 and a second surface 243 opposite each other, the first surface 242 faces the end cap 23, the second surface 243 faces away from the end cap 23, the accommodating groove 241 is grooveed in a direction from the first surface 242 to the second surface 243, the accommodating groove 241 forms an opening at the first surface 242, and the direction in which the first surface 242 points at the second surface 243 is the depth direction of the accommodating groove 241.

In an embodiment in which the accommodating groove 241 is of an annular structure, the distance between the first groove side surface 2412 and the second groove side surface 2413 in the first direction X is a difference between the radii of the first groove side surface 2412 and the second groove side surface 2413. Of course, it is possible for the distance between the first groove side surface 2412 and the second groove side surface 2413 in the first direction X to gradually decrease in the depth direction of the accommodating groove 241 in multiple ways. For example, each of the first groove side surface 2412 and the second groove side surface 2413 is arranged at an obtuse angle from the first groove bottom surface 2411. For another example, one of the first groove side surface 2412 and the second groove side surface 2413 is arranged at an obtuse angle from the first groove bottom surface 2411, and the other one is arranged at a right angle from the first groove bottom surface 2411.

In this embodiment, the width of the accommodating groove 241 gradually decreases from the opening of the accommodating groove in the depth direction, such that the connecting portion 231 more easily enter the accommodating groove 241.

In some embodiments, still referring to FIGS. 6 and 7, the current collecting member 24 includes a first connecting region 244 and a second connecting region 245. The first connecting region 244 is connected to the connecting portion 231, and the first connecting region 244 is formed in the current collecting member 24 at a position where the accommodating groove 241 is provided. The second connecting region 245 is connected to the electrode assembly 22. Projections of the first connecting region 244 and the second connecting region 245 on a plane perpendicular to the thickness direction of the end cap 23 do not overlap with each other.

The first connecting region 244 is the part of the current collecting member 24 connected to the connecting portion 231. After the current collecting member 24 is provided with the accommodating groove 241, the rest of the current collecting member 24 other than those corresponding to the accommodating groove 241 is the first connecting region 244. In other words, in the thickness direction Z of the end cap 23, the part of the current collecting member 24 located between the first groove bottom surface 2411 of the accommodating groove 241 and the second surface 243 is the first connecting region 244. Taking an example in which the first connecting region 244 is welded to the connecting portion 231, a welding mark formed by welding the first connecting region 244 to the connecting portion 231 is located in the first connecting region 244.

The second connecting region 245 is the portion of the current collecting member 24 connected to the electrode assembly 22. Taking an example in which the second connecting region 245 is welded to the tab 221 of the electrode assembly 22, a welding mark formed by welding the second connecting region 245 to the tab 221 is located in the second connecting region 245. It may be understood that projections of the welding mark formed by welding the first connecting region 244 to the connecting portion 231 and the welding mark formed by welding the second connecting region 245 to the tab 221 do not overlap with each other on the plane perpendicular to the thickness direction Z of the end cap 23.

In this embodiment, the first connecting region 244 is staggered with the second connecting region 245, the first connecting region 244 and the second connecting region 245 do not affect each other, the connection between the first connecting region 244 and the connecting portion 231 does not affect the connection between the second connecting region 245 and the electrode assembly 22, thereby improving the stability of the connection between the current collecting member 24 and the electrode assembly 22. For example, after the second connecting region 245 is welded to the tab 221 of the electrode assembly 22, and when the connecting portion 231 is welded to the first connecting region 244, since the first connecting region 244 is staggered with the second connecting region 245, secondary welding of the second connecting region 245 may be avoided, and the influences on the strength of the connection between the second connecting region 245 and the tab 221 of the electrode assembly 22 can be reduced.

In some embodiments, still referring to FIGS. 6 and 7, the first connecting region 244 surrounds the outside of the second connecting region 245.

In this embodiment, the first connecting region 244 is of an annular structure, and the accommodating groove 241 is correspondingly of an annular structure. The portion of the current collecting member 24 located on the inner side of the first connecting region 244 is the second connecting region 245.

In this embodiment, the first connecting region 244 surrounds the outside of the second connecting region 245, such that the first connecting region 244 has a large size, and a current passage area between the current collecting member 24 and the end cap 23 can be increased.

It should be noted that in other embodiments, alternatively, the second connecting region 245 may surround the outside of the first connecting region 244.

In some embodiments, still referring to FIG. 6, the thickness of the second connecting region 245 is represented by L, the depth of the accommodating groove 241 is represented by H, and the thickness and the depth satisfy: 0.15 ≤ H/L < 1.

The thickness of the second connecting region 245 is the thickness of the current collecting member 24. In FIG. 6, the thickness of the second connecting region 245 is the distance between the first surface 242 and the second surface 243 in the thickness direction Z of the end cap 23, and the depth of the accommodating groove 241 is the distance between the first surface 242 and the first groove bottom surface 2411 in the thickness direction Z of the end cap 23.

Exemplarily, 0.1 mm ≤ H ≤ 1 mm.

In this embodiment, the ratio of the depth of the accommodating groove 241 to the thickness of the second connecting region 245 is set within a reasonable range, such that the depth of the accommodating groove 241 is not too small so as to accommodate more parts of the connecting portion 231, and the deformation of the current collecting member 24 is reduced.

In some embodiments, referring to FIG. 7, in the thickness direction Z of the end cap 23, the connecting portion 231 abuts against the first groove bottom surface 2411 of the accommodating groove 241.

It should be noted that in the case of the connecting portion 231 abutting against the first groove bottom surface 2411 of the accommodating groove 241, each of the first groove side surface 2412 and the second groove side surface 2413 of the accommodating groove 241 is arranged at a distance from the connecting portion 231. In accordance with claim 1, in FIG. 7, each of the first groove side surface 2412 and the second groove side surface 2413 of the accommodating groove 241 is arranged at a distance from the connecting portion 231.

In this embodiment, the connecting portion 231 abuts against the first groove bottom surface 2411 of the accommodating groove 241 in the thickness direction Z of the end cap 23, such that the contact area between the connecting portion 231 and the current collecting member 24 is increased, and thus the current passage area between the current collecting member 24 and the end cap 23 is increased.

In some embodiments, the current collecting member 24 is welded to the connecting portion 231. The current collecting member 24 is firmly connected to the connecting portion 231, achieving stable current passage between the current collecting member 24 and the connecting portion 231.

In an embodiment in which the current collecting member 24 abuts against the first groove bottom surface 2411 of the accommodating groove 241, the connecting portion 231 may be welded and fixed to the first connecting region 244 of the current collecting member 24 by means of keyhole welding.

In some embodiments, the connecting portion 231 is a closed structure that is connected end to end and that extends in a circumferential direction of the end cap 23.

Exemplarily, the connecting portion 231 is of an annular structure, and the accommodating groove 241 is also of an annular structure.

In this embodiment, the connecting portion 231 is of a closed structure connected end to end. With such a structure, on the one hand, the periphery of the current collecting member 24 is uniformly subjected to a pressing force from the connecting portion 231, and the deformation of the current collecting member 24 can be effectively reduced; on the other hand, the current passage area between the current collecting member 24 and the end cap 23 is increased.

In some embodiments, referring to FIG. 9, FIG. 9 is a schematic connection diagram of the end cap 23 and the current collecting member 24 shown in FIG. 4. The end cap 23 further includes a body portion 232 and a recess 233. The body portion 232 is connected to the housing 21, the body portion 232 has an inner surface 2321 and an outer surface 2322 opposite each other in the thickness direction Z of the end cap 23, the inner surface 2321 faces the current collecting member 24, and the connecting portion 231 protrudes from the inner surface 2321. The recess 233 is arranged on the body portion 232 at a position corresponding to the connecting portion 231, and the recess 233 is recessed in a direction from the outer surface 2322 to the current collecting member 24.

The body portion 232 may be connected and fixed to the housing 21 by means of welding. The body portion 232 may be circular, rectangular, etc. Taking an example in which the body portion 232 is circular, in a radial direction of the body portion 232, it is possible to weld the part of the body portion 232 exceeding the outer side surface of the connecting portion 231 to the housing 21.

The shape of the recess 233 is the same as the shape of the connecting portion 231. Exemplarily, the recess 233 and the connecting portion 231 each are of an annular structure, and the recess 233 and the connecting portion 231 each are arranged coaxially with the body portion 232.

In this embodiment, the arrangement of the recess 233 reduces the thickness of the end cap 23 at the connecting portion 231 and allows the connecting portion 231 and the current collecting member 24 to be more easily connected together, enhancing the stability of the connection between the connecting portion 231 and the current collecting member 24. For example, when the connecting portion 231 is welded to the current collecting member 24, the thickness of the end cap 23 at the connecting portion 231 is reduced, such that the connecting portion 231 and the current collecting member 24 are more robust after welding.

In some embodiments, still referring to FIG. 9, the body portion 232 includes a pressure relief portion 2323, the connecting portion 231 surrounds the pressure relief portion 2323, and the pressure relief portion 2323 is provided with an indented groove 2324.

The part of the body portion 232 located within the inner side surface of the connecting portion 231 is the pressure relief portion 2323. Taking an example in which the connecting portion 231 is of an annular structure, the pressure relief portion 2323 is of a circular structure located within the inner side surface of the connecting portion 231. The indented groove 2324 in the pressure relief portion 2323 may have various shapes, such as circular, U-shaped, linear, etc.

A weakened region is formed on the pressure relief portion 2323 at a position where the indented groove 2324 is provided, and cracks when a pressure or temperature inside the battery cell 20 reaches a threshold, so as to release the pressure inside the battery cell 20. The end cap 23 of such a structure has the function of pressure relief, thereby improving the safety of the battery cell 20.

In some embodiments, still referring to FIG. 9, the pressure relief portion 2323 partially protrudes in a direction close to the current collecting member 24 and forms a boss 2325, and a groove 2326 is formed on the side of the pressure relief portion 2323 facing away from the current collecting member 24 at a position corresponding to the boss 2325. The indented groove 2324 is provided in a surface of the boss 2325 facing the current collecting member 24; and/or, the groove 2326 has a second groove bottom surface 2326a, and the indented groove 2324 is provided in the second groove bottom surface 2326a.

The boss 2325 on the pressure relief portion 2323 may be formed by means of stamping. After a side of the pressure relief portion 2323 facing away from the current collecting member 24 is stamped, the groove 2326 is formed in the side of the pressure relief portion 2323 facing away from the current collecting member 24, and the boss 2325 is correspondingly formed on a side of the pressure relief portion 2323 facing the current collecting member 24.

Exemplarily, the boss 2325 and the groove 2326 each are circular, the boss 2325 and the groove 2326 are coaxially arranged, and the diameter of the boss 2325 is greater than the diameter of the groove 2326.

The second groove bottom surface 2326a is the surface of the groove 2326 located at the deepest position in the depth direction, and the direction in which the outer surface 2322 of the body portion 232 pointing at the inner surface 2321 is a depth direction of the groove 2326. Exemplarily, in the thickness direction Z of the end cap 23, the second groove bottom surface 2326a is located between the outer surface 2322 and the inner surface 2321 of the body portion 232.

Exemplarily, in FIG. 9, the indented groove 2324 is formed in the surface of the boss 2325 facing the current collecting member 24, that is, the indented groove 2324 is recessed in a direction from the surface of the boss 2325 facing the current collecting member 24 to the second groove bottom surface 2326a.

In this embodiment, the region of the end cap 23 provided with the indented groove 2324 is wholly recessed toward the interior of the battery cell 20. When the end cap 23 is subjected to an impact force from the outside of the battery cell 20, the impact force is less likely to directly act on the region of the end cap 23 provided with the groove 2326, so as to achieve the purpose of protecting the region of the end cap 23 provided with the indented groove 2324, and to reduce the risk of damages and cracks in the region of the end cap provided with the indented groove 2324 due to the impact force on the end cap 23.

In some embodiments, still referring to FIG. 9, in the thickness direction Z of the end cap 23, the boss 2325 is arranged a distance from the current collecting member 24.

It may be understood that a gap is formed between the surface of the boss 2325 facing the current collecting member 24 and the first surface 242 of the current collecting member 24.

Exemplarily, the current collecting member 24 is provided with a central hole 246, and the gap between the boss 2325 and the current collecting member 24 is in communication with the central hole 246.

In this embodiment, a certain gap is present between the boss 2325 and the current collecting member 24, the current collecting member 24 is less likely to affect pressure relief through the end cap 23, and it is ensured that the end cap 23 can normally release the pressure when the pressure or temperature inside the battery cell 20 reaches the threshold.

The embodiments of the present application provide a battery 100, including a case 10 and battery cells 20 provided in any one of the embodiments described above. The battery cells 20 are accommodated inside the case 10.

The embodiments of the present application provide a power consuming device, including a battery 100 according to claim 11.

It should be noted that the embodiments in the present application and features in the embodiments may be combined with each other without conflicts.

## Claims

1. A battery cell (20), comprising:
a housing (21) having an opening;
an electrode assembly (22) accommodated inside the housing (21);
an end cap (23) connected to the housing (21) and closing the opening; and
a current collecting member (24) located inside the housing (21) and arranged on a side of the electrode assembly (22) facing the end cap (23), the current collecting member (24) being connected to the end cap (23) and the electrode assembly (22);
wherein the end cap (23) comprises a connecting portion (231) connected to the current collecting member (24), and in a thickness direction (Z) of the end cap (23), an accommodating groove (241) is provided in a surface of the current collecting member (24) facing the end cap (23), and the connecting portion (231) is at least partially accommodated in the accommodating groove (241);
wherein the accommodating groove (241) has a first groove bottom surface (2411) and a first groove side surface (2412), the first groove side surface (2412) being connected to the first groove bottom surface (2411);
in the thickness direction (Z), the first groove bottom surface (2411) faces the connecting portion (231);
in a first direction (X), the first groove side surface (2412) is located on an inner side of the connecting portion (231), the first direction (X) being perpendicular to the thickness direction (Z); and
an angle between the first groove side surface (2412) and the first groove bottom surface (2411) is represented by θ₁ and satisfies: 90° < θ₁ < 180°;
wherein the accommodating groove (241) further comprises a second groove side surface (2413) connected to the first groove bottom surface (2411), the second groove side surface (2413) being located on an outer side of the connecting portion (231) in the first direction (X); and
an angle between the second groove side surface (2413) and the first groove bottom surface (2411) is represented by θ₂ and satisfies: 90° < θ₂ < 180°; and
wherein in the first direction (X), each of the first groove side surface (2412) and the second groove side surface (2413) is arranged at a distance from the connecting portion (231).

2. The battery cell (20) according to claim 1, wherein the accommodating groove (241) is a closed groove (2326) that is connected end to end and that extends in a circumferential direction of the current collecting member (24); optionally the accommodating groove (241) is an annular groove (2326).

3. The battery cell (20) according to claim 1 or claim 2, wherein the accommodating groove (241) comprises a first groove side surface (2412) and a second groove side surface (2413), and in the first direction (X), the first groove side surface (2412) and the second groove side surface (2413) are located on two sides of the connecting portion (231) respectively, the first direction (X) being perpendicular to the thickness direction (Z); and
a distance between the first groove side surface (2412) and the second groove side surface (2413) in the first direction (X) gradually decreases in a depth direction of the accommodating groove (241).

4. The battery cell (20) according to any one of claims 1-3, wherein the current collecting member (24) comprises:
a first connecting region (244) connected to the connecting portion (231) and formed in the current collecting member (24) at a position where the accommodating groove (241) is provided; and
a second connecting region (245) connected to the electrode assembly (22);
wherein projections of the first connecting region (244) and the second connecting region (245) on a plane perpendicular to the thickness direction (Z) do not overlap with each other.

5. The battery cell (20) according to claim 4, wherein the first collecting region surrounds an outer side of the second connecting region (245).

6. The battery cell (20) according to claim 4 or 5, wherein the thickness of the second connecting region (245) is represented by L, the depth of the accommodating groove (241) is represented by H, and the thickness and the depth satisfy: 0.15 ≤ H/L < 1.

7. The battery cell (20) according to any one of claims 1-6, wherein the accommodating groove (241) has a first groove bottom surface (2411), and the connecting portion (231) abuts against the first groove bottom surface (2411) in the thickness direction (Z).

8. The battery cell (20) according to any one of claims 1-7, wherein the current collecting member (24) is welded to the connecting portion (231).

9. The battery cell (20) according to any one of claims 1-8, wherein the connecting portion (231) is of a closed structure that is connected end to end and that extends in a circumferential direction of the end cap (23).

10. The battery cell (20) according to any one of claims 1-9, wherein the end cap (23) further comprises:
a body portion (232) connected to the housing (21), the body portion (232) having, in the thickness direction (Z), an inner surface (2321) and an outer surface (2322) that are opposite each other, the inner surface (2321) facing the current collecting member (24), and the connecting portion (231) protruding from the inner surface (2321); and
a recess (233) arranged in the body portion (232) at a position corresponding to the connecting portion (231), the recess (233) being recessed in a direction from the outer surface (2322) to the current collecting member (24); optionally the body portion (232) comprises a pressure relief portion (2323), the connecting portion (231) surrounds the pressure relief portion (2323), and the pressure relief portion (2323) is provided with an indented groove (2324); optionally the pressure relief portion (2323) partially protrudes in a direction close to the current collecting member (24) and forms a boss (2325), and a groove (2326) is formed on the side of the pressure relief portion (2323) facing away from the current collecting member (24) a position corresponding to the boss (2325);
the indented groove (2324) is provided in a surface of the boss (2325) facing the current collecting member (24); and/or the groove (2326) has a second groove bottom surface (2326a) provided with the indented groove (2324); and optionally in the thickness direction (Z), the boss (2325) is arranged at a distance from the current collecting member (24).

11. A battery (100), comprising:
a case (10); and
battery cells (20) according to any one of claims 1-10, the battery cells (20) being accommodated inside the case (10).

12. A power consuming device, comprising a battery (100) according to claim 11.

## Patentansprüche

1. Batteriezelle (20), umfassend:
ein Gehäuse (21) mit einer Öffnung;
eine Elektrodenanordnung (22), die innerhalb des Gehäuses (21) aufgenommen ist;
eine Endkappe (23), die mit dem Gehäuse (21) verbunden ist und die Öffnung verschließt; und
ein Stromsammelelement (24), das innerhalb des Gehäuses (21) angeordnet ist und auf einer der Endkappe (23) zugewandten Seite der Elektrodenanordnung (22) angeordnet ist, wobei das Stromsammelelement (24) mit der Endkappe (23) und der Elektrodenanordnung (22) verbunden ist;
wobei die Endkappe (23) einen Verbindungsabschnitt (231) umfasst, der mit dem Stromsammelelement (24) verbunden ist, und in einer Dickenrichtung (Z) der Endkappe (23) eine Aufnahmenut (241) in einer der Endkappe (23) zugewandten Oberfläche des Stromsammelelements (24) vorgesehen ist, und der Verbindungsabschnitt (231) zumindest teilweise in der Aufnahmenut (241) aufgenommen ist;
wobei die Aufnahmenut (241) eine erste Nutbodenfläche (2411) und eine erste Nutseitenfläche (2412) aufweist, wobei die erste Nutseitenfläche (2412) mit der ersten Nutbodenfläche (2411) verbunden ist;
in der Dickenrichtung (Z) die erste Nutbodenfläche (2411) dem Verbindungsabschnitt (231) zugewandt ist;
in einer ersten Richtung (X) die erste Nutseitenfläche (2412) auf einer Innenseite des Verbindungsabschnitts (231) angeordnet ist, wobei die erste Richtung (X) senkrecht zu der Dickenrichtung (Z) ist; und
ein Winkel zwischen der ersten Nutseitenfläche (2412) und der ersten Nutbodenfläche (2411) durch θ1 dargestellt wird und erfüllt: 90° < θ1 < 180°;
wobei die Aufnahmenut (241) ferner eine zweite Nutseitenfläche (2413) umfasst, die mit der ersten Nutbodenfläche (2411) verbunden ist, wobei die zweite Nutseitenfläche in der ersten Richtung (X) auf einer Außenseite des Verbindungsabschnitts (231) angeordnet ist; und
ein Winkel zwischen der zweiten Nutseitenfläche (2413) und der ersten Nutbodenfläche (2411) durch θ2 dargestellt wird und erfüllt: 90° < θ2 < 180°; und
wobei in der ersten Richtung (X) jede der ersten Nutseitenfläche (2412) und der zweiten Nutseitenfläche (2413) in einem Abstand von dem Verbindungsabschnitt (231) angeordnet ist.

2. Batteriezelle (20) nach Anspruch 1, wobei die Aufnahmenut (241) eine geschlossene Nut (2326) ist, die Ende an Ende verbunden ist und sich in einer Umfangsrichtung des Stromsammelelements (24) erstreckt; optional ist die Aufnahmenut (241) eine ringförmige Nut (2326).

3. Batteriezelle (20) nach Anspruch 1 oder Anspruch 2, wobei die Aufnahmenut (241) eine erste Nutseitenfläche (2412) und eine zweite Nutseitenfläche (2413) umfasst, und in der ersten Richtung (X) die erste Nutseitenfläche (2412) und die zweite Nutseitenfläche (2413) jeweils auf zwei Seiten des Verbindungsabschnitts (231) angeordnet sind, wobei die erste Richtung (X) senkrecht zu der Dickenrichtung (Z) ist; und
ein Abstand zwischen der ersten Nutseitenfläche (2412) und der zweiten Nutseitenfläche (2413) in der ersten Richtung (X) in einer Tiefenrichtung der Aufnahmenut (241) allmählich abnimmt.

4. Batteriezelle (20) nach einem der Ansprüche 1-3, wobei das Stromsammelelement (24) umfasst:
einen ersten Verbindungsbereich (244), der mit dem Verbindungsabschnitt (231) verbunden ist und in dem Stromsammelelement (24) an einer Position gebildet ist, an der die Aufnahmenut (241) vorgesehen ist; und
einen zweiten Verbindungsbereich (245), der mit der Elektrodenanordnung (22) verbunden ist;
wobei sich Projektionen des ersten Verbindungsbereichs (244) und des zweiten Verbindungsbereichs (245) auf einer Ebene senkrecht zu der Dickenrichtung (Z) nicht miteinander überlappen.

5. Batteriezelle (20) nach Anspruch 4, wobei der erste Verbindungsbereich eine Außenseite des zweiten Verbindungsbereichs (245) umgibt.

6. Batteriezelle (20) nach Anspruch 4 oder 5, wobei die Dicke des zweiten Verbindungsbereichs (245) durch L dargestellt wird, die Tiefe der Aufnahmenut (241) durch H dargestellt wird, und die Dicke und die Tiefe erfüllen: 0,15 ≤ H/L < 1.

7. Batteriezelle (20) nach einem der Ansprüche 1-6, wobei die Aufnahmenut (241) eine erste Nutbodenfläche (2411) aufweist, und der Verbindungsabschnitt (231) in der Dickenrichtung (Z) an der ersten Nutbodenfläche (2411) anliegt.

8. Batteriezelle (20) nach einem der Ansprüche 1-7, wobei das Stromsammelelement (24) mit dem Verbindungsabschnitt (231) verschweißt ist.

9. Batteriezelle (20) nach einem der Ansprüche 1-8, wobei der Verbindungsabschnitt (231) von einer geschlossenen Struktur ist, die Ende an Ende verbunden ist und sich in einer Umfangsrichtung der Endkappe (23) erstreckt.

10. Batteriezelle (20) nach einem der Ansprüche 1-9, wobei die Endkappe (23) ferner umfasst:
einen Körperabschnitt (232), der mit dem Gehäuse (21) verbunden ist, wobei der Körperabschnitt (232) in der Dickenrichtung (Z) eine Innenfläche (2321) und eine Außenfläche (2322) aufweist, die einander gegenüberliegen, wobei die Innenfläche (2321) dem Stromsammelelement (24) zugewandt ist, und der Verbindungsabschnitt (231) von der Innenfläche (2321) vorsteht; und
eine Vertiefung (233), die in dem Körperabschnitt (232) an einer dem Verbindungsabschnitt (231) entsprechenden Position angeordnet ist, wobei die Vertiefung (233) in einer Richtung von der Außenfläche (2322) zu dem Stromsammelelement (24) vertieft ist; optional umfasst der Körperabschnitt (232) einen Druckentlastungsabschnitt (2323), der Verbindungsabschnitt (231) umgibt den Druckentlastungsabschnitt (2323), und der Druckentlastungsabschnitt (2323) ist mit einer Einkerbungsnut (2324) versehen; optional steht der Druckentlastungsabschnitt (2323) teilweise in einer Richtung nahe dem Stromsammelelement (24) vor und bildet einen Vorsprung (2325), und eine Nut (2326) ist auf der dem Stromsammelelement (24) abgewandten Seite des Druckentlastungsabschnitts (2323) an einer dem Vorsprung (2325) entsprechenden Position gebildet;
die Einkerbungsnut (2324) in einer dem Stromsammelelement (24) zugewandten Oberfläche des Vorsprungs (2325) vorgesehen ist; und/oder die Nut (2326) eine zweite Nutbodenfläche (2326a) aufweist, die mit der Einkerbungsnut (2324) versehen ist; und optional ist in der Dickenrichtung (Z) der Vorsprung (2325) in einem Abstand von dem Stromsammelelement (24) angeordnet.

11. Batterie (100), umfassend:
einen Kasten (10); und
Batteriezellen (20) nach einem der Ansprüche 1-10, wobei die Batteriezellen (20) innerhalb des Kastens (10) aufgenommen sind.

12. Stromverbrauchende Vorrichtung, umfassend eine Batterie (100) nach Anspruch 11.

## Revendications

1. Cellule de batterie (20), comprenant :
un boîtier (21) ayant une ouverture ;
un ensemble d'électrodes (22) logé à l'intérieur du boîtier (21) ;
un capuchon d'extrémité (23) relié au boîtier (21) et fermant l'ouverture ; et
un élément collecteur de courant (24) situé à l'intérieur du boîtier (21) et agencé sur un côté de l'ensemble d'électrodes (22) faisant face au capuchon d'extrémité (23), l'élément collecteur de courant (24) étant relié au capuchon d'extrémité (23) et à l'ensemble d'électrodes (22) ;
dans laquelle le capuchon d'extrémité (23) comprend une portion de liaison (231) reliée à l'élément collecteur de courant (24), et, dans une direction d'épaisseur (Z) du capuchon d'extrémité (23), une rainure de logement (241) est prévue dans une surface de l'élément collecteur de courant (24) faisant face au capuchon d'extrémité (23), et la portion de liaison (231) est au moins partiellement logée dans la rainure de logement (241) ;
dans laquelle la rainure de logement (241) présente une première surface de fond de rainure (2411) et une première surface latérale de rainure (2412), la première surface latérale de rainure (2412) étant reliée à la première surface de fond de rainure (2411) ;
dans la direction d'épaisseur (Z), la première surface de fond de rainure (2411) fait face à la portion de liaison (231) ;
dans une première direction (X), la première surface latérale de rainure (2412) est située sur un côté intérieur de la portion de liaison (231), la première direction (X) étant perpendiculaire à la direction d'épaisseur (Z) ; et
un angle entre la première surface latérale de rainure (2412) et la première surface de fond de rainure (2411) est représenté par θ1 et satisfait : 90° < θ1 < 180° ;
dans laquelle la rainure de logement (241) comprend en outre une deuxième surface latérale de rainure (2413) reliée à la première surface de fond de rainure (2411), la deuxième surface latérale de rainure étant située sur un côté extérieur de la portion de liaison (231) dans la première direction (X) ; et
un angle entre la deuxième surface latérale de rainure (2413) et la première surface de fond de rainure (2411) est représenté par θ2 et satisfait : 90° < θ2 < 180° ; et
dans laquelle, dans la première direction (X), chacune de la première surface latérale de rainure (2412) et de la deuxième surface latérale de rainure (2413) est agencée à une distance de la portion de liaison (231).

2. Cellule de batterie (20) selon la revendication 1, dans laquelle la rainure de logement (241) est une rainure fermée (2326) qui est reliée bout à bout et qui s'étend dans une direction circonférentielle de l'élément collecteur de courant (24) ; optionnellement la rainure de logement (241) est une rainure annulaire (2326).

3. Cellule de batterie (20) selon la revendication 1 ou la revendication 2, dans laquelle la rainure de logement (241) comprend une première surface latérale de rainure (2412) et une deuxième surface latérale de rainure (2413), et, dans la première direction (X), la première surface latérale de rainure (2412) et la deuxième surface latérale de rainure (2413) sont situées respectivement sur deux côtés de la portion de liaison (231), la première direction (X) étant perpendiculaire à la direction d'épaisseur (Z) ; et
une distance entre la première surface latérale de rainure (2412) et la deuxième surface latérale de rainure (2413) dans la première direction (X) diminue progressivement dans une direction de profondeur de la rainure de logement (241).

4. Cellule de batterie (20) selon l'une quelconque des revendications 1 à 3, dans laquelle l'élément collecteur de courant (24) comprend :
une première région de liaison (244) reliée à la portion de liaison (231) et formée dans l'élément collecteur de courant (24) à une position où la rainure de logement (241) est prévue ; et
une deuxième région de liaison (245) reliée à l'ensemble d'électrodes (22) ;
dans laquelle des projections de la première région de liaison (244) et de la deuxième région de liaison (245) sur un plan perpendiculaire à la direction d'épaisseur (Z) ne se chevauchent pas l'une l'autre.

5. Cellule de batterie (20) selon la revendication 4, dans laquelle la première région de liaison entoure un côté extérieur de la deuxième région de liaison (245).

6. Cellule de batterie (20) selon la revendication 4 ou 5, dans laquelle l'épaisseur de la deuxième région de liaison (245) est représentée par L, la profondeur de la rainure de logement (241) est représentée par H, et l'épaisseur et la profondeur satisfont : 0,15 ≤ H/L < 1.

7. Cellule de batterie (20) selon l'une quelconque des revendications 1 à 6, dans laquelle la rainure de logement (241) présente une première surface de fond de rainure (2411), et la portion de liaison (231) vient en butée contre la première surface de fond de rainure (2411) dans la direction d'épaisseur (Z).

8. Cellule de batterie (20) selon l'une quelconque des revendications 1 à 7, dans laquelle l'élément collecteur de courant (24) est soudé à la portion de liaison (231).

9. Cellule de batterie (20) selon l'une quelconque des revendications 1 à 8, dans laquelle la portion de liaison (231) est d'une structure fermée qui est reliée bout à bout et qui s'étend dans une direction circonférentielle du capuchon d'extrémité (23).

10. Cellule de batterie (20) selon l'une quelconque des revendications 1 à 9, dans laquelle le capuchon d'extrémité (23) comprend en outre :
une portion de corps (232) reliée au boîtier (21), la portion de corps (232) ayant, dans la direction d'épaisseur (Z), une surface intérieure (2321) et une surface extérieure (2322) qui sont opposées l'une à l'autre, la surface intérieure (2321) faisant face à l'élément collecteur de courant (24), et la portion de liaison (231) faisant saillie depuis la surface intérieure (2321) ; et
un évidement (233) agencé dans la portion de corps (232) à une position correspondant à la portion de liaison (231), l'évidement (233) étant en retrait dans une direction allant de la surface extérieure (2322) vers l'élément collecteur de courant (24) ; optionnellement la portion de corps (232) comprend une portion de décharge de pression (2323), la portion de liaison (231) entoure la portion de décharge de pression (2323), et la portion de décharge de pression (2323) est pourvue d'une rainure d'entaille (2324) ; optionnellement la portion de décharge de pression (2323) fait partiellement saillie dans une direction proche de l'élément collecteur de courant (24) et forme un bossage (2325), et une rainure (2326) est formée sur le côté de la portion de décharge de pression (2323) opposé à l'élément collecteur de courant (24) à une position correspondant au bossage (2325) ;
la rainure d'entaille (2324) est prévue dans une surface du bossage (2325) faisant face à l'élément collecteur de courant (24) ; et/ou la rainure (2326) présente une deuxième surface de fond de rainure (2326a) pourvue de la rainure d'entaille (2324) ; et optionnellement, dans la direction d'épaisseur (Z), le bossage (2325) est agencé à une distance de l'élément collecteur de courant (24).

11. Batterie (100), comprenant :
un caisson (10) ; et
des cellules de batterie (20) selon l'une quelconque des revendications 1 à 10, les cellules de batterie (20) étant logées à l'intérieur du caisson (10).

12. Dispositif consommateur d'énergie, comprenant une batterie (100) selon la revendication 11.
